# DEMANDE DE BREVET EUROPEEN

(11) **EP 0 662 749 A1**
(43) Date de publication de la demande: **12.07.1995**
(21) Numéro de dépôt: 94403050.1
(22) Date de dépôt: 28.12.1994
(51) Int. Cl.: H02P 1/44

(54) **Procédé d'augmentation du couple d'un moteur asynchrone à double bobinage**

(30) Priorité: 30.12.1993 FR 9315882
(71) Demandeur: SOCIETE ELECTROMECANIQUE DU NIVERNAIS SELNI, F-58001 Nevers (FR)
(72) Inventeur: Herrada, José Luis, F-92402 Courbevoie Cedex (FR)
(74) Mandataire: Benoit, Monique

(57) **Abrégé**

L'invention concerne un procédé d'augmentation du couple d'un moteur asynchrone à double bobinage, notamment applicable aux moteurs de lave-linge qui nécessitent, ainsi qu'il est connu, deux vitesses de rotation différentes, l'une pour le lavage, l'autre pour l'essorage.

Selon l'invention, dans l'application lave-linge, on augmente le couple du moteur lors du démarrage en grande vitesse, en alimentant en plus une ou plusieurs des bobines destinées à assurer la rotation en petite vitesse. Dans un premier mode de réalisation, on alimente l'ensemble des bobines destinées à la petite vitesse. Dans un autre mode de réalisation, on alimente une seule des bobines destinées à la petite vitesse, mais à une fréquence supérieure à celle à laquelle elle est normalement alimentée. Dans une autre variante de réalisation, les deux alimentations supplémentaires précédentes sont utilisées cumulativement.

## Description

La présente invention concerne un procédé d'augmentation du couple d'un moteur asynchrone à double bobinage. Elle est notamment applicable aux moteurs de machines à laver le linge qui nécessitent, ainsi qu'il est connu, deux vitesses de rotation différentes, l'une pour le lavage, l'autre pour l'essorage.

On sait qu'un moteur électrique asynchrone comporte un stator, portant des bobinages alimentés en courant alternatif qui créent un champ tournant induisant des courants dans un rotor. C'est l'action du champ magnétique tournant sur les courants induits dans le rotor qui assure la rotation de ce dernier. La vitesse de rotation du rotor est, cependant, naturellement inférieure à la vitesse de rotation du champ tournant car l'égalité entre les vitesses ne permettrait pas d'induction de courant dans le rotor ; la différence entre la vitesse de rotation du champ tournant et la vitesse de rotation du rotor est appelée glissement. La vitesse de rotation du champ tournant et, par suite, la vitesse de rotation du moteur dépend de la fréquence d'alimentation du stator et du nombre de pôles des bobinages.

Pour entraîner le tambour des machines à laver le linge, on utilise souvent un moteur asynchrone dans lequel on obtient deux vitesses différentes en réalisant sur le stator deux bobinages distincts, avec un nombre de pôles différent : en général, le bobinage destiné à la vitesse de rotation la plus rapide, correspondant à l'essorage, comporte deux pôles ; pour le lavage, ce bobinage est mis hors circuit et un deuxième bobinage comportant un plus grand nombre de pôles (six, huit, douze ou seize pôles habituellement), permettant d'obtenir de plus petites vitesses, est alors utilisé.

Une caractéristique de ce type de moteur est que le couple, au démarrage en grande vitesse, est relativement faible puis augmente ensuite avec la vitesse. Or, le couple qui est nécessaire à l'essorage, lui, diminue avec la vitesse, du fait notamment que le linge s'allège en eau au fur et à mesure de l'essorage. La conséquence en est que le dimensionnement du moteur qui est nécessaire au démarrage grande vitesse (essorage) est largement inutile ensuite.

De plus, ainsi qu'il est connu, ce type de moteur s'échauffe considérablement au démarrage et il est donc souhaitable de rejoindre la vitesse de fonctionnement permanent aussi rapidement que possible. Cela conduit à choisir un dimensionnement de moteur qui permette un couple de démarrage plus élevé que celui qui serait strictement nécessaire : cet aspect aggrave encore le déséquilibre du bilan énergétique constaté précédemment.

Enfin, les différentes solutions envisagées dans le cadre de la recherche actuelle de vitesses d'essorage élevées, comme par exemple l'augmentation du nombre de pôles de la petite vitesse avec modification du rapport de transmission moteur-tambour pour maintenir constante la vitesse de lavage, conduisent à devoir encore augmenter le couple du moteur au démarrage.

La présente invention a pour objet de répondre à ces problèmes, non pas en augmentant le dimensionnement du moteur mais en augmentant le couple de ce moteur uniquement lors du démarrage en grande vitesse ; cela est réalisé en alimentant en plus une ou plusieurs des bobines formant le bobinage destiné à assurer la rotation en petite vitesse. Dans un premier mode de réalisation, on alimente l'ensemble du bobinage destiné à la petite vitesse. Dans un autre mode de réalisation, on alimente une seule des bobines destinées à la petite vitesse, mais à une fréquence supérieure à celle à laquelle elle est normalement alimentée. Dans une autre variante de réalisation, les deux alimentations supplémentaires décrites précédemment sont utilisées cumulativement. Il est ainsi possible, selon l'invention, d'utiliser un moteur de dimensions plus petites, permettant ainsi une réduction de poids et de coût.

Plus précisément, l'invention a pour objet un procédé d'augmentation du couple d'un moteur asynchrone, le moteur comportant un rotor et un stator, le stator comportant un premier bobinage assurant la rotation du rotor à une première vitesse et un deuxième bobinage assurant la rotation du rotor à une deuxième vitesse, plus faible que la première ; chacun des bobinages comportant une pluralité de bobines ; le procédé consiste, lors de l'utilisation du premier bobinage et au démarrage du moteur, à alimenter de plus au moins une des bobines du deuxième bobinage.

D'autres objets, particularités et résultats de la présente invention apparaîtront plus clairement à l'aide de la description suivante, illustrée par les dessins annexés qui représentent :
- la figure 1, le schéma électrique d'un exemple de bobinage utilisable pour obtenir la plus grande des deux vitesses qu'est susceptible de fournir un moteur asynchrone à double bobinage ;
- la figure 2, le schéma électrique d'un exemple de bobinage destiné à fournir la plus petite des deux vitesses du moteur ;
- la figure 3, des courbes de variation typiques des couples obtenus à l'aide d'un moteur asynchrone à double bobinage, en fonction de la vitesse de rotation de ce dernier ;
- la figure 4, une courbe illustrant le couple obtenu dans le premier des modes de réalisation de l'invention mentionnés ci-dessus ;
- la figure 5, une courbe illustrant le couple obtenu dans le second des modes de réalisation de l'invention mentionnés ci-dessus ;
- la figure 6, une courbe illustrant le couple obtenu en utilisant cumulativement les deux modes de réalisation précédents.

Sur ces différentes figures, les mêmes références se rapportent aux mêmes éléments.

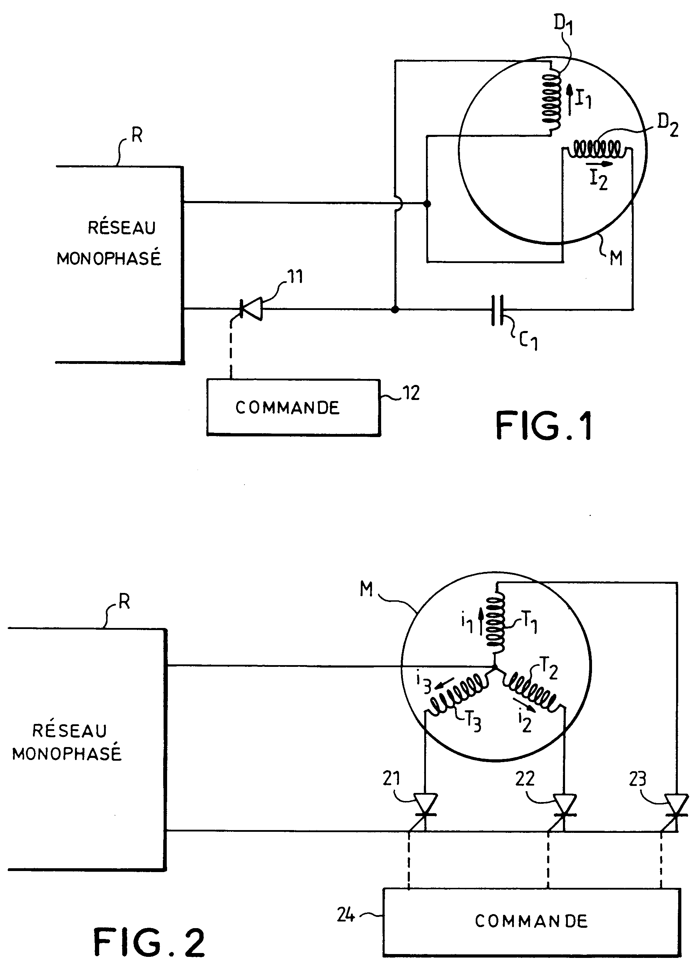

La figure 1 est donc le schéma électrique d'un exemple de bobinage utilisé pour obtenir la plus grande des vitesses du moteur asynchrone.

Dans ce schéma, le stator du moteur M porte un bobinage formé de deux bobines D₁ et D₂ montées en parallèle sur un réseau R, qui peut être typiquement en France le réseau EDF monophasé 50Hz, 220V, alimentant les foyers domestiques. Un condensateur C₁ est disposé en série avec l'une des bobines, par exemple la bobine D₂. Le circuit comporte encore un élément interrupteur 11, tel qu'un triac par exemple, commandé par un circuit de commande 12 et permettant notamment de mettre hors ou sous tension les deux bobines D₁ et D₂. La valeur du condensateur C₁ est ajustée en fonction de la valeur des inductances des bobines D₁ et D₂ pour que les courants I₁ et I₂, parcourant les deux bobines respectivement, soient déphasés sensiblement de 90°. De la sorte, le rotor du moteur voit un champ tournant dans le stator, de la bobine D₁ à la bobine D₂, qui produit la rotation du rotor à une vitesse proche de celle du champ dans le stator. On a ainsi simulé une alimentation diphasée à partir d'un réseau R monophasé. Si le réseau R fournit un courant alternatif de fréquence 50Hz, le stator comportant deux pôles, la vitesse du rotor est donc proche de 50 tours par seconde, soit 3000 tours par minute.

L'utilisation d'un tel montage pour les opérations d'essorage dans un lave-linge suppose un rapport de transmission entre arbre du moteur et tambour du lave-linge qui permette de descendre à la vitesse d'essorage recherchée, par exemple comprise entre 400 et 1500 tours par minute.

La figure 2 est le schéma électrique d'un exemple de bobinage destiné à fournir la plus petite des deux vitesses du moteur.

Le stator comporte ici trois bobines, respectivement T₁, T₂ et T₃ montées en étoile, le centre de l'étoile étant relié à l'une des bornes du réseau R. L'autre borne de chacune des bobines T₁-T₃ est reliée à l'autre borne du réseau R, chacune par l'intermédiaire d'un dispositif interrupteur, respectivement 21, 22 et 23, par exemple également du type triac, et commandés par un circuit de commande 24.

En fonctionnement, les bobines T₁, T₂ et T₃ sont reliées l'une après l'autre au réseau R, de sorte à obtenir un champ tournant à une fréquence qui est le tiers de celle du courant fourni par le réseau R, soit 16,6Hz dans le cas d'un réseau à 50Hz. On a ainsi simulé une alimentation triphasée à partir du réseau R monophasé.

Enfin, la vitesse de rotation du rotor est fonction du nombre de pôles formés par les bobinages du stator. Pour le bobinage destiné à la grande vitesse (essorage), le nombre de pôles est en général minimum (une paire de pôles) ; pour le bobinage destiné à la petite vitesse, on augmente le nombre m de paires de pôles en fonction du rapport désiré entre les petite et grande vitesses. A titre d'exemple, avec un tel moteur, on peut par exemple obtenir une vitesse d'essorage de l'ordre de 1000 tours par minute, pour une vitesse de lavage de l'ordre de 50 tours par minute avec un bobinage petite vitesse comportant quatre paires de pôles, c'est-à-dire que le stator comporte quatre ensembles de trois bobines telles que décrites figure 2, et une fréquence de 16,6Hz. Il est à noter que les bobines décrites ici peuvent être, ainsi qu'il est connu, matériellement formées par plusieurs bobines élémentaires, ou enroulements, mais connectées entre elles de sorte à ne former électriquement qu'une seule bobine.

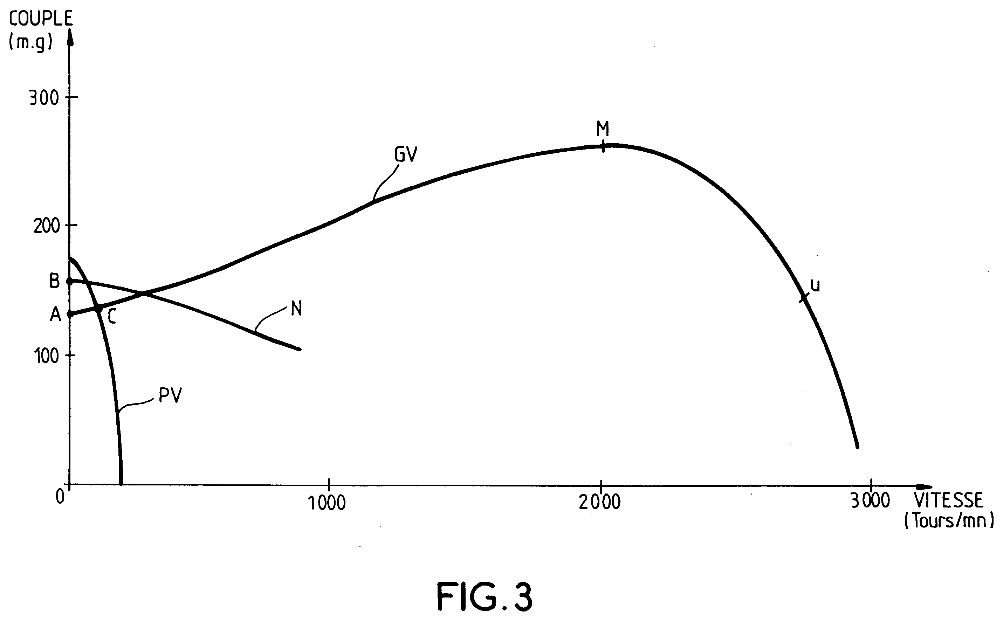

La figure 3 illustre la variation typique des couples obtenus à l'aide d'un moteur asynchrone à deux bobinages tel que décrit précédemment, en fonction de sa vitesse de rotation.

Sur ce graphe, on a représenté en abscisse la vitesse du rotor en tours par minute et en ordonnée, le couple en mètre.gramme.

La courbe GV représente la variation du couple en fonction de la vitesse pour le bobinage grande vitesse. On voit que le couple obtenu reste faible au démarrage (dans cet exemple, inférieur à 150 m.g) et augmente fortement pour passer par un maximum M, ici vers 2000 tours par minute pour un couple d'environ 260 m.g., et redécroître ensuite assez rapidement jusqu'à la vitesse maximum du moteur, qui est proche de 3000 tours par minute. Le point de fonctionnement U du moteur est choisi classiquement dans la deuxième partie de la courbe, après son maximum M.

Sur la figure 3, on a également représenté par N le début de la courbe du couple qui est nécessaire lorsqu'un tel moteur est utilisé pour une phase d'essorage dans un lave-linge. Comme évoqué plus haut, on voit que cette courbe est globalement décroissante, le couple le plus élevé étant nécessaire au démarrage lorsque le linge est le plus imprégné d'eau. A titre d'exemple, il est représenté au démarrage sur la figure, en B, comme étant de l'ordre de 160 m.g.

Enfin, on a encore représenté sur ce graphe, une courbe PV représentant l'évolution du couple fourni par le bobinage petite vitesse utilisé lors du lavage. Celui-ci, sensiblement au maximum au démarrage, par exemple vers 170 m.g., décroît rapidement.

Il ressort de ces différentes courbes que le couple disponible au démarrage lors de la phase d'essorage (point A) est inférieur au couple nécessaire (point B). Si on tient compte du fait que la vitesse de départ peut être donnée par le bobinage petite vitesse (à l'issue d'une phase de lavage), on se trouve au point C où le couple, bien que supérieur à sa valeur au point A, est encore inférieur à ce qui est nécessaire (courbe N).

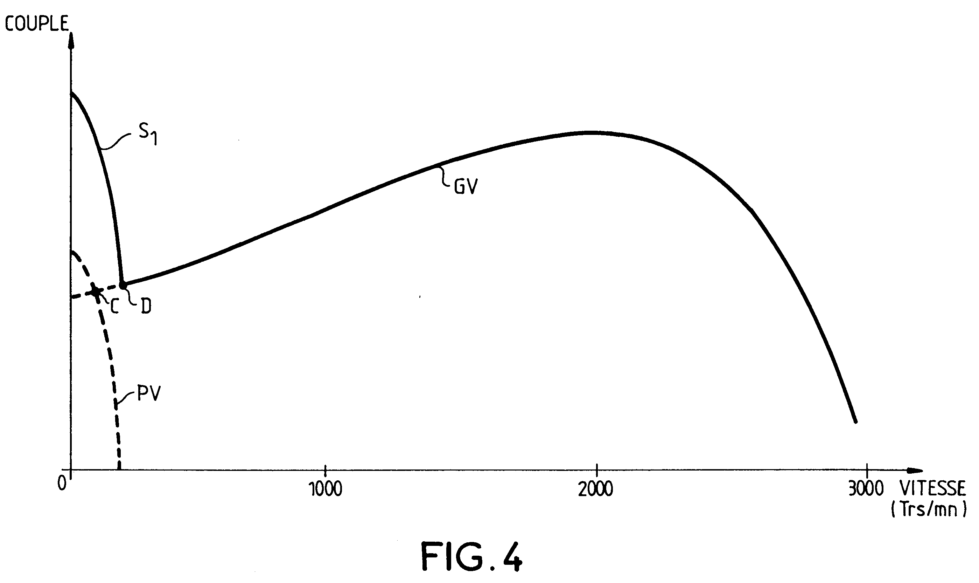

La figure 4 illustre le couple obtenu par la mise en oeuvre du premier mode de réalisation de l'invention.

Sur cette figure, on retrouve la courbe GV, la courbe PV étant en pointillés. Selon ce mode de réalisation de l'invention, au démarrage de la phase grande vitesse, on alimente en plus l'ensemble du bobinage petite vitesse (T₁, T₂, T₃); cela se traduit, sur le plan du couple, théoriquement par l'addition de la courbe PV à la courbe GV. En pratique, on obtient une courbe S₁ qui est un peu inférieure à la somme des deux courbes précédentes, PV et GV, et qui rencontre la courbe GV en un point D.

De la sorte, le point D de fonctionnement obtenu correspond à la fois à une vitesse supérieure et à un couple supérieur à ceux du point de fonctionnement précédent, C, comme illustré sur la figure 4.

L'alimentation du bobinage correspondant à la petite vitesse est assurée par la commutation des interrupteurs 21, 22 et 23 sous la commande du circuit 24 (figure 2). Sa durée peut être avantageusement limitée au temps nécessaire au moteur pour arriver au point de fonctionnement D de la figure 4.

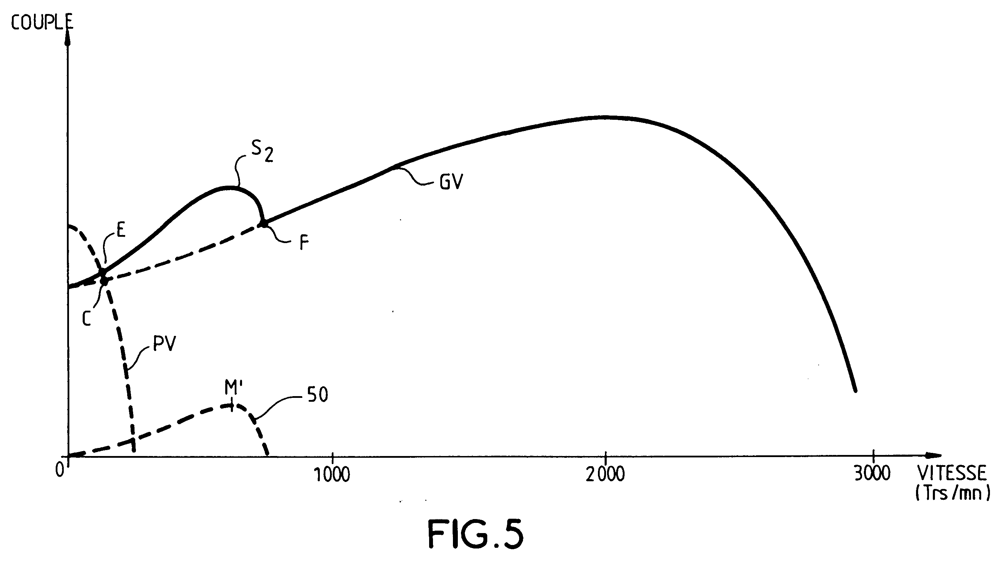

La figure 5 illustre les valeurs de couple obtenues selon une autre mise en oeuvre de l'invention.

Sur cette figure, on retrouve encore les courbes GV et PV (en pointillés) de la figure 3. Selon cette deuxième mise en oeuvre de l'invention, lors du démarrage de la phase grande vitesse, on alimente en plus l'une des bobines (T₁, T₂ ou T₃) du bobinage petite vitesse, mais de façon permanente.

Le couple dû à une telle bobine alimentée en permanence par le réseau R est celui d'un moteur monophasé ; il est représenté par la courbe en pointillés 50 sur la figure 5. Cette courbe montre que le couple est nul à l'origine et augmente pour passer par un maximum M', proche de la vitesse maximum.

La courbe résultant de la superposition des courbes 50 et GV est repérée S₂. Elle coupe la courbe GV en F. On voit que le point de fonctionnement E du moteur à la fin du fonctionnement de la petite vitesse (à l'issue de la phase de lavage) présente un couple plus élevé que le point de fonctionnement C précédent.

Comme précédemment, l'alimentation de l'une des bobines T₁, T₂ ou T₃ est assurée par la commutation de l'un des interrupteurs 21, 22 ou 23 sous la commande du circuit 24. La durée de cette phase peut être également limitée au temps nécessaire au moteur pour arriver au point F de la figure 5.

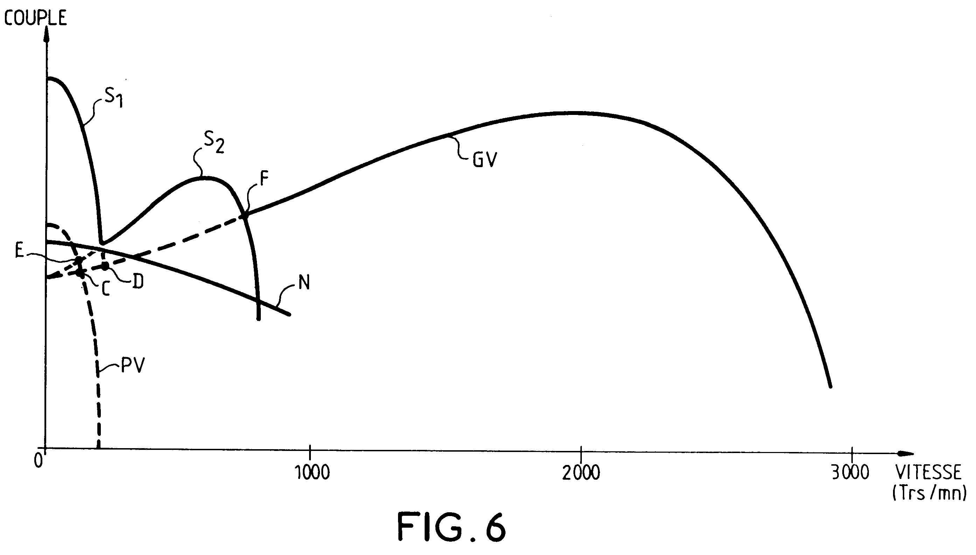

La figure 6 illustre le couple obtenu selon l'invention en utilisant cumulativement les deux modes de mise en oeuvre précédents.

Sur ce graphe, on a représenté à nouveau, à titre d'exemple, une courbe N du couple nécessaire à un essorage dans un lave-linge, et les courbes GV et PV (en pointillés) précédentes. La courbe GV est maintenant formée au démarrage par les courbes S₁ puis S₂, les interrupteurs 21-23 assurant les commutations nécessaires.

Il apparaît maintenant qu'en tout point de la phase de démarrage, et bien entendu également en régime permanent, le couple disponible est supérieur au couple nécessaire (courbe N) ; il lui est même généralement très supérieur, ce qui permet au moteur de franchir cette zone de démarrage même dans des conditions critiques (sous-tension, échauffements dûs à des utilisations précédentes,....) et, ce, rapidement ; ce dernier point est également important, du fait que la consommation énergétique et l'échauffement sont substantiels lors de cette phase.

Il a été décrit ci-dessus un procédé d'augmentation au démarrage du couple d'un moteur asynchrone à double bobinage, par exemple utilisé pour un lave-linge, mais le procédé selon l'invention n'est bien entendu limité ni aux exemples de bobinages décrits ni à cette application particulière et il est utilisable pour tout moteur à double bobinage.

## Revendications

1. Procédé d'augmentation du couple d'un moteur asynchrone, le moteur comportant un rotor et un stator, le stator comportant un premier bobinage assurant la rotation du rotor à une première vitesse et un deuxième bobinage assurant la rotation du rotor à une deuxième vitesse, plus faible que la première, chacun des bobinages comportant une pluralité de bobines ; le procédé étant caractérisé par le fait qu'il consiste, lors de l'utilisation du premier bobinage et au démarrage du moteur, à alimenter de plus au moins une des bobines du deuxième bobinage.

2. Procédé selon la revendication 1, caractérisé par le fait que, lors dudit démarrage, l'ensemble des bobines du deuxième bobinage est alimenté, pendant une première durée limitée.

3. Procédé selon la revendication 1, caractérisé par le fait que, lors dudit démarrage, l'une seulement des bobines du deuxième bobinage est alimentée, mais à une fréquence supérieure à celle à laquelle elle est alimentée lorsque le deuxième bobinage est en fonctionnement, pendant une deuxième durée limitée.

4. Procédé selon la revendication 2, caractérisé par le fait que, à la fin de la première durée, on alimente l'une des bobines du deuxième bobinage pendant une deuxième durée limitée, mais à une fréquence supérieure à celle à laquelle elle est alimentée lorsque le deuxième bobinage est en fonctionnement.

5. Moteur asynchrone pour la mise en oeuvre du procédé selon l'une des revendications précédentes, caractérisé par le fait que le premier bobinage comporte deux bobines (D₁, D₂) formant deux pôles, et que le deuxième bobinage comporte m ensembles de trois bobines (T₁, T₂,T₃) formant 2m pôles, chacune de ces trois bobines étant susceptible d'être reliée à un réseau d'alimentation (R) par l'intermédiaire de moyens interrupteurs (21, 22, 23) de sorte à être alimentées séquentiellement à une fréquence sensiblement égale au tiers de la fréquence fournie par le réseau, la bobine du deuxième bobinage alimentée lors de ladite deuxième durée limitée étant alimentée à la fréquence du réseau.
